# EUROPEAN PATENT APPLICATION

(11) **EP 1 418 406 A2**
(43) Date of publication of application: **12.05.2004**
(21) Application number: 04000849.2
(22) Date of filing: 26.11.1993
(51) Int. Cl.: G01F 1/12, G01F 1/115, G01F 15/00, G05D 7/01, D06F 39/08

(54) **Device for the measurement and/or the volumetric control of a fluid**

(30) Priority: 27.11.1992 IT al920003
(62) Divisional of application: 93119113.4
(71) Applicant: ELTEK S.p.A., I-15033 Casale Monferrato (Alessandria) (IT)
(72) Inventor: Sassone, Luigi, 15033 Casale Monferrato (IT)
(74) Representative: Dini, Roberto, Dr. Ing.

(57) **Abstract**

A device, connectable to a supply line of a fluid, is described, for the measurement and/or volumetric control of said fluid, comprising:
- an intercepting device (2, 7);
- a body (2) equipped with ducts (3, 4) for the inlet and the outlet of the fluid flow (F);
- a flow sensor (9) for detecting the fluid flow (F) between said ducts (3, 4), said flow sensor (9) comprising an impeller (12) and a detecting unit (6), said detecting unit (6) being apt to detect the rotation of said impeller (12).

The characterizing principle of the described device consists in that regulating means (13, 25, 26) are provided, apt to regulate the fluid flow (F) of said fluid, said regulating means (13, 25, 26) being located downstream said impeller (12).

## Description

The present invention refers to a device connectable to a supply line of a fluid, for the measurement and/or the volumetric control of the fluid itself.

Devices are known for the measurement and/or the volumetric control of liquids and fluids in general, flowing through conduits at predetermined rate, in order to have the exact control of the quantity supplied into containers or, in any way, flowing from a source. Such devices are for example used for metering water required for the operation of domestic washing machines (such as laundry washing machines and dishwashing machines), or in water distribution systems, in connection with meters.

Certain devices of known type are mainly provided for checking eventual losses or excessive deliveries of liquid, and thus are not characterised by an high metering precision; in these devices, the electrovalve enabling the delivery, or interrupting it, is always in the open position and is made to close only in the case of anomalous delivery.

Other devices for the measurement and/or the volumetric control of known type, in order to ensure a greater operating precision, are realised so as to present small passage conduits, so as to increase the speed of the liquid flowing down, or have a flow meter comprising a tangential impeller, having metallic inserts, and a detector of the rotation of such inserts, and consequently of the impeller revolutions.

In such devices for the measurement and/or the volumetric control, the flow of the liquid to be measured is deviated in respect of the minimum path trajectory, with the consequence of the creation of turbulence, in the entry and/or the exit of the flow meter, and of loss of pressure particularly in the peripheral zone of the impeller in the case of low pressure . Such drawbacks worsen the operation of the device.

Turbulence in the entry and/or the exit of known flow meters are also due to the lacking of systems which allow to govern the flow of liquid which passes through the device, and to the difficulty of directing with precision, namely in the case of low pressures, said flow on a tangential impeller.

In some other known devices for the measurement and/or the volumetric control, the movement of the impeller is revealed by optical detecting means, which senses the interruption, determined by the impeller, of a luminescent ray; said devices have therefore the drawback that they can operate only with transparent liquids.

All the devices for the measurement and/or the volumetric control of the known type have then the drawback of correctly operating only when used with liquids without impurities, such as sands or ferrous residues, being able to deposit at times between the vanes impeller and the body which houses it, so causing its jamming.

Another typical problem is due to the complexity of the components used in the known devices and their arrangement; for instance the use of tangential impellers makes the known devices for volumetric control complex, bulky, expensive and being of difficult maintenance and repairing.

As an example of the above cited known prior art, the devices subject of US-A-5.007.453, US-A- 4.428.088 and GB-B- 618.414 are cited.

It is also known to use said flow detector in connection with electrovalves the shutter of which is directly commanded in opening or closure by the electromagnet; such devices have the drawback of requiring high power for allowing the control of liquids being at high pressures.

The main aim of the present invention is that of solving the above cited problems and in particular of indicating a device for the measurement and/or the volumetric control which is very precise in all the possible various operating conditions, both at the high and the low pressures, even with different flow rates or in presence of notable quantity of impurities, and which is furthermore simple, of low cost and of very reduced dimensions.

Such aim is attained according to the present invention by a devices connectable to a supply line of a fluid, for the measurement and/or the volumetric control of the fluid itself, of the type comprising an housing having an inlet duct, which can be connected to said supply line, and an outlet duct which can be connected to an utilising apparatus downstream the device, and a flow sensor, for detecting the flow of the fluid through the inlet duct and the outlet duct, said flow sensor comprising an impeller and a unit being able to detect the rotation of said impeller, in particular for determining on the basis of the number of revolutions of said impeller the quantity of fluid which passes between said inlet duct and said outlet duct, characterised in that the axis of rotation of said impeller is arranged in a coaxial way in respect of the flow of fluid which have to be measured.

Further characteristics and advantages of the present inventions will result in being clear from the detailed description which follows and from the annexed drawings, supplied as a pure explanatory and not limiting example, wherein:
- figure 1 is a view in elevation of the device according to the present invention;
- figure 2 is a sectional view of the device according to invention, along line W-W of figure 1;
- figure 3 is a sectional view of a flow sensor making part of the device according to invention;
- figure 4 is an exploded view of the elements constituting the flow sensor of the device according to invention;
- figure 5 is a cross sectional view of the sensor of figure 3, along line X-X;
- figure 6 is a cross sectional view of the sensor of figure 3, along line Y-Y;
- figure 7 is a view, in a greater scale, of a particular of figure 2;
- figure 8 is a sectional view of the device according to invention, along line Z-Z of figure 1.

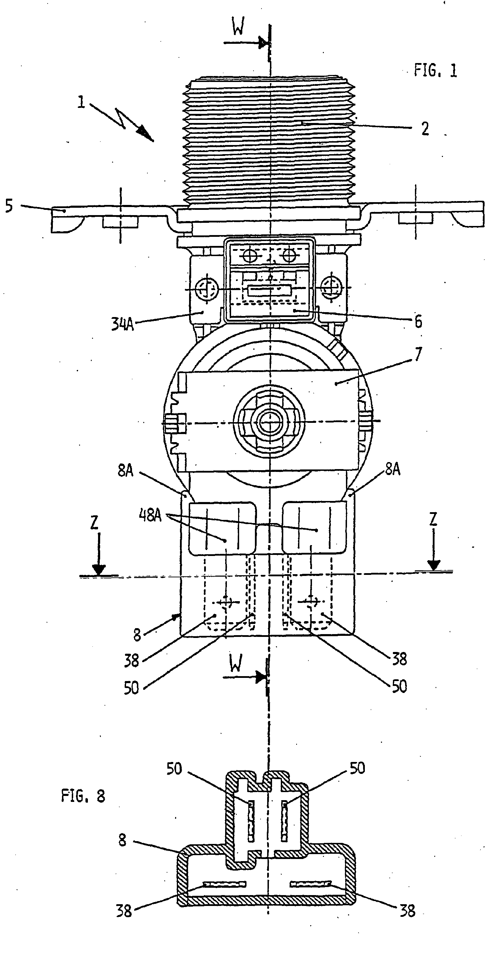

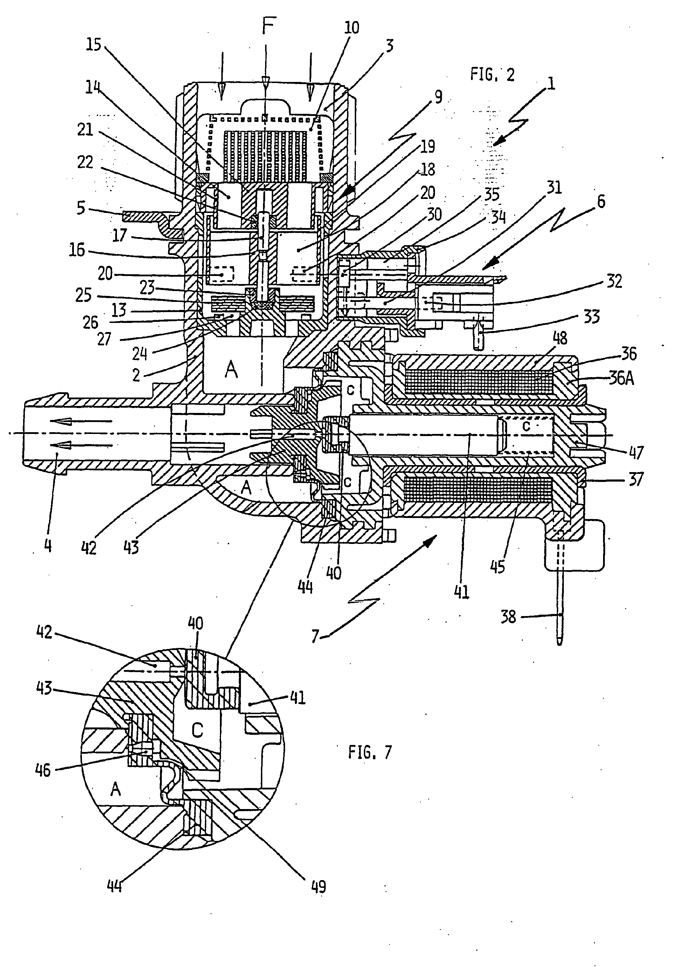

In figures 1 and 2, reference number 1 indicates as a whole the device being object of the present invention; such device 1 has a main body 2 comprising an inlet duct 3 for the liquid, which can be connected, for example to a tap of the water mains, and an outlet duct 4 for the liquid, which can be connected for example to a washing machine; onto body 2, which presents a flange 5 for its fixing to the washing machine, a detecting unit 6 and an electrovalve 7 are mounted, the latter being in particular of the unbalanced type; with 8 a connector/adapter is indicated (not represented in figure 2), having terminals for the electric supply of the electrovalve 7.

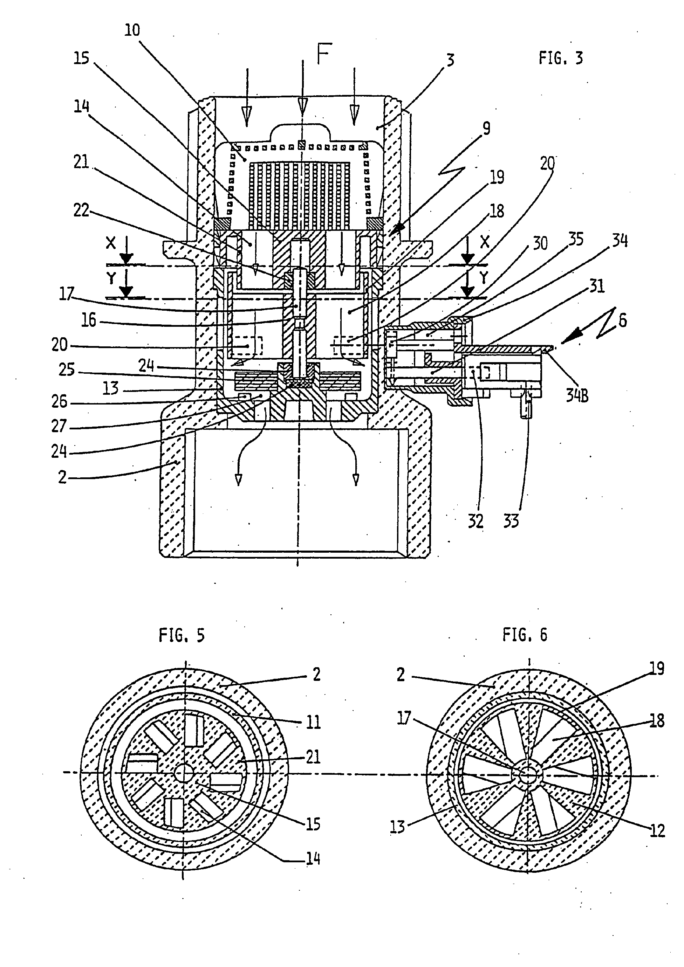

Within the inlet duct 3 a flow sensor is housed, indicated as a whole with 9; as it can be seen in figure 3 and 4, such a flow sensor 9, which is arranged under a filter 10, includes, in the given order a diffuser 11, an impeller 12 and a flow governor 13.

In figure 4 the flow sensor 9 is illustrated by means of an exploded view.

The diffuser 11, arranged under the filter 10, is able to convey the flow of liquid (F, figures 2 and 3) directly on the underlying impeller 12; to this purpose the diffuser 11 presents helical vanes 14, integral with a central core 15 and shaped in order to convey said flow (F) on the peripheral zone of the vanes (18) of the underlying impeller 12 (see also figure 5).

The impeller 12, idle and axial to the inlet duct 3 of the liquid, has a central core 16, integral with an axial pivot 17, and is provided with helical vanes 18, being tilted in the opposite direction with respect to the vanes 14 of the diffuser 11; the vanes 18 are mutually joined in their external part by a protection ring 19, on the external side of which, in correspondence of one or more vanes 18, magnetic elements 20 are inserted.

As it can be seen, in particular from figure 6, the diameter of the impeller 12 is such to determine the presence of a free passage between the protection ring 19 and the external body which houses it (that it is in practice the body of the flow governor 13, as it will be clear in the following); such a free passage has a dimension greater than the dimensions of meshes of the filter 10, in order to avoid the jamming of the impeller 12 in presence of small impurities; from figures 5 and 6 it can furthermore be seen how the central core 15 of the diffuser 11 has a diameter being greater than that of the central core 16 of the impeller 12.

The presence of the same protection ring 19 and of a narrowing (21) of the diffuser 11, allows in any case to avoid lateral dispersions, in the zone included between the external ends of vanes 18 and the cylindrical part (13) wherein the impeller rotates idle, and possible efficiency losses in the detection of the flow.

In this way an optimum efficiency is assured in the range of pressure being comprised between 0,1 bar and 10 bar, for flow rates even lower than 2-3 litre/minute.

The axial pivot 17, which realises the axis of rotation of the impeller 12, is supported at its ends by two bearings 22 and 23, one of which being supported on a thrust bearing bush 24: the bearing 22 is housed in the diffuser 11 while the bearing 23 and the bush 24 are housed in the underlying flow governor 13, that has the aim of stabilising the liquid flow (F).

The flow governor 13 is of the variable-section type and utilises the deformation of a membrane 25, resiliently deformable, which is subject to the action of the flow (F) for the self-adjustment of the liquid passage; with 26 spacers are indicated, being of calibrated height and distribution under membrane 25, which allow to limit the closure of an axial passage 27, and consequently to define a maximum flow.

The flow governor 13 and the diffuser 11 are shaped so as they can be mutually coupled, by means of reciprocal hooking means (which can be seen in 28 and 29), by forming with the impeller 12 a single compact structure, that allows for an easy and precise pre-assembling of the components.

As can be seen in figures 2 and 3, the cited components of the flow sensor 9 are housed in the inlet duct 3 of the liquid, in which a suitable seat can be provided.

External to such a duct 3, on the body 2 of the device 1, the detecting units 6 is fixed, which presents a magnetic detector 30 being in axis with the magnetic elements 20 of the impeller 12.

The magnetic detector 30 is mechanically and electrically connected to a printed circuit board 31, onto which electrically conductive tracks are obtained; one end of such a printed circuit board 31 is shaped in order to form a male connector 32, separably coupled with an electric connector 33, for the quick wiring with a processing/transducing electronic assembly, not represented.

The magnetic detector 30, the printed circuit board 31 and the male connector 32 are inserted in a protecting enclosure 34, comprising first terminals (34A, Figure 1) for the fixing to the body 2 of the device 1; second terminals (34B, Figure 3) are also provided for the fixing of the electric connector 33, which is fitted on the male connector 32 of the detecting units 6.

The enclosure 34 can be filled with impermeable and electrically insulating material 35, or can be obtained by thermoplastic moulding directly on the sensor 30, in order to protect the magnetic detector 30 from eventual water losses or in any way from the environmental humidity.

The electrovalve 7 (see figure 2) presents an electromagnet 36, composed by an induction winding or coil, obtained with electrically conductive wire being wound on a hollow spool 36A, and provided with a magnetic joke 37; the ends of the induction winding are electrically connected to a pair of supply terminals 38.

With 40 a plug is indicated, inserted in an end of an inductor or movable core 41; with 42 a central hole is indicated, realised in a disk 43 which supports a membrane 44; when the electromagnet 36 is not supplied at the electric terminals 38, the plug 40, through the movable core, is maintained by a spring 45 in the closing position of the central hole 42.

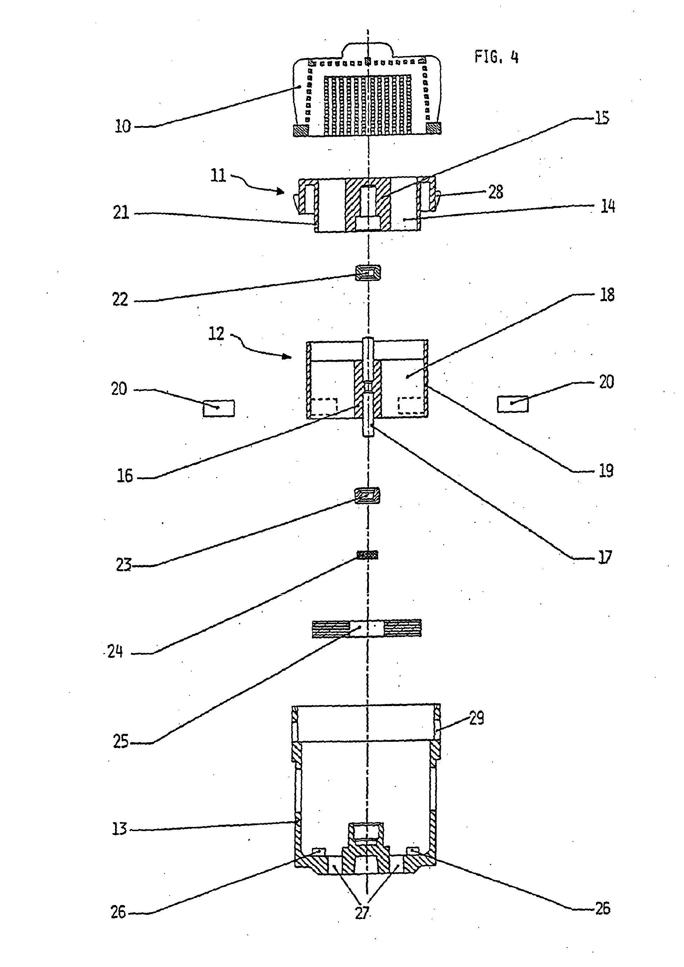

As can be seen in figure 7, the membrane 44 has calibrated holes 46 which, in conjunction with a conduit 49 obtained in the disk 43, are able to put in communication a chamber A, defined between the flow sensor 9 and the electrovalve 7, with a circular chamber C, delimited by the membrane 44 and the body 47 wherein the movable core 41 of the electromagnet 36 is arranged.

The electromagnet 36 is enclosed in a protective coating 48, obtained by thermoplastic material moulding and inserted onto body 47; such a coating 48 is provided with a zone (48A, figure 1) for the hooking of the connector/adapter 8.

Body 47, which houses the movable core 41, has a threaded part, that is screwed in a threaded open seat obtained in the body 2 of the device 1.

In figure 8 the connector/adapter 8 is represented in section, which is engaged onto zone 48A of the electromagnet 36 by means of mechanical hooking terminals (8A, figure 1); the connector/adapter 8 comprises two electric terminals 50 that, once coupled on the terminals 38 of the electromagnet, transform the latter ones in a connector being of common use, which allows to utilise the device with the different types of wiring normally available on trade (for example of the RAST 5 type).

The functioning of the device subject of the present invention is as follows.

With the electrovalve being closed, the liquid in pressure, present into chamber A, flows through the calibrated holes 46 in the circular chamber C: the pressure in the chamber C, which is greater than the pressure present in the outlet duct 4, determines a movement of the membrane 44 and of the disk 43 in the closing position of a passage which places in communication the chamber A and the outlet duct 4.

For the passage of the liquid through the device 1, the electrovalve 7, of the normally closed type, must be activated in opening, by supplying the electromagnet 36: to this purpose, the electrovalve 7 is electrically connected to the corresponding washing machine, which, through its own timer, provides to command at the appropriate instant (for example at the beginning of a washing phase) the supply of the electromagnet 36.

When such an electromagnet 36 is supplied, the movable core 41 is attracted, opening in this way the central hole 42 of the disk 43; this allows to bring the liquid in the outlet duct 4 at the same pressure present in the chamber C and, under the thrust of the liquid incoming from duct 3, to move the membrane 44 and the disk 43 in order to open the passage between the chamber A and the outlet duct 4.

The incoming liquid, after having been filtered by the meshes of the filter 10, is conveyed by vanes 14 of the diffuser 11 on the peripheral zone of the vanes 18 of the impeller 12, in order to increase the working couple which acts on the impeller even with low flow rates of liquid.

The impeller 12 is in this way activated in angular movement by the liquid flow; such flow which exits impeller 12 is stabilised by flow governor 13.

The liquid flows therefore in the chamber A, and then passes in the outlet duct 4, for finally reaching the utilising washing machine.

The rotation of the impeller 12, by means of the magnetic elements 20, is sensed by the magnetic detector 30 of the detecting units 6; the pulses being revealed by detector 30 are transmitted to an electronic assembly, that processes them, determines, on the basis of the revolutions/volume ratio the water quantity having passed, and transforms said pulses in an electric signal for the control of the electrovalve 7; in practice, when the quantity of liquid which is passed through the device 1 is equal the predetermined one, the electromagnet 36 is de-energised, and the movable nucleus 41 returns in its original position, so that plug 40 closes the central hole 42; in such a condition the chamber C returns to have a pressure being greater that the pressure present in the outlet duct 4, so determining a movement of the membrane 44 and of the disk 43 in the closure position of the passage between the chamber A and the outlet duct 4.

The device is therefore again in the initial conditions.

It should also be noted that the particular configuration described, with a flow sensor 9 arranged between the valve (7) for the interception of the liquid and the tap of the water mains, allows for a further optimisation of the functioning of the device.

In fact, during the closing cycle of the electrovalve 7, the emptying of the duct 3 wherein the impeller 12 is inserted, is avoided, so assuring a precise operation even in the first phases of the successive cycle of controlled delivery; also the measurement of the passing flow is therefore more correct, and any risks of initial turbulence upstream the flow sensor is also avoided.

From the given description the characteristics of the device subject of the present invention are clear, so as clear are its advantages. In particular:
- the use of the impeller 12, with a rotation axis being arranged coaxially in respect of the flow of fluid which has to be measured, avoids deviations of the fluid itself, which could negatively influence the operation of the device; for the same reason, the sensor may be easily equipped with a diffuser and with a flow governor, which allow to avoid turbulence and loss of pressure;
- the arrangement of the flow governor 13 downstream the impeller 12 allows a more precise measurement, if compared to the opposite configuration (with governor upstream the impeller) inasmuch as any turbulence that could influence the operation of the impeller 12 is avoided;
- the arrangement of the flow sensor 9 between the valve (7) for the interception of the liquid and the tap of the water mains (3) assures a precise operation since the first phases of the cycle of controlled delivery, with absence of any initial turbulence upstream the device;
- the protection ring 19 allows to optimise the efficiency of the impeller 12, because in this way the passage of ferrous impurities (normally present in the conduits of the water mains) in front of the magnetic elements 20 is avoided, which could accumulate with the consequent jamming of the impeller; the presence of a free circumferential space between the impeller 12 and the body that houses it (13), allows then to avoid eventual jammings due to residues not withheld by filter 10;
- the structure of the diffuser 11, with helical vanes 14 tilted in opposite direction in respect of the vanes 18 of the impeller 12, is apt at directing the liquid flow (F) mainly on the peripheral zone of the impeller vanes, in order to ensure a correct operation even at the low flow rates, inasmuch as the working torque that acts on the impeller 12 is increased; in this way an optimal efficiency is assured in the range of pressures between 0,1 bar and 10 bar, for flow rates even lower that 2-3 litres/minute: in this range of rates/pressures the precision of the device results in being very high, with tolerances, on controlled volumes, limited in the order of 2-3%, which cannot be found in systems having a comparable performances/size and cost ratio;
- the flow sensor 9, having the impeller axially mounted, reduces the turbulence in respect of the known prior art, where the fluid had to follow a path being different from the minimum one;
- the flow sensor 9, taking advantage from the impeller 12 being mounted axially to the flow to be measured and from its integrated assembly with the diffuser 11 and the governor 13, results in having a very compacts structure, and with a very reduced size: this allows its insertion in the common conduits for the connection to the water mains, normally of the 3/4" ∅ gas type;
- the flow sensor 9, the detecting unit 6 and the electromagnet 36 can be easily pre-assembled and pre-tested; the use of such pre-assembled parts simplifies the final assembling operation of the device, which can be realised with common automated systems; such flexibility allows to reduce the costs of the device and the risks of having scrap pieces as final product, and to adapt the product to different needs;
- the presence of a filter (10) upstream the flow sensor and the presence of the free circumferential space around the impeller (that it is of greater width in respect of the filter meshes), assures the correct operation of the device also in presence of impurities in the flow of fluid to be to measured.

From the above therefore results that the device according to invention noticeably simplifies and improves the precision of intervention and its field of application in respect of the devices of the known type, inasmuch as it correctly operates in very different conditions of use, even with different liquid flow rates or with high quantity of impurities, and in any case both in presence of high or low pressures (differences commonly present in the urban water mains).

It is clear that many changes are possible for the skilled-man to the device for the volumetric control, the metering and/or the distribution and/or the measurement of liquids, in particular for washing machines, described as an example, without departing from the novelty principles inherent the invention.

It is also clear that the flow sensor shown and described with reference to the use on a washing machine could be advantageously employed in different cases, even without an electrovalve, for instance in water distribution systems, in conjunction with meters.

## Claims

1. Device, connectable to a supply line of a fluid, for the measurement and/or volumetric control of said fluid, comprising:
- an intercepting device (2, 7);
- a body (2) equipped with ducts (3, 4) for the inlet and the outlet of the fluid flow (F);
- a flow sensor (9) for detecting the fluid flow (F) between said ducts (3, 4), said flow sensor (9) comprising an impeller (12) and a detecting unit (6), said detecting unit (6) being apt to detect the rotation of said impeller (12),
**characterized in that**,
regulating means (13, 25, 26) are provided, apt to regulate the fluid flow (F) of said fluid, said regulating means (13, 25, 26) being located downstream said impeller (12).

2. Device, according to claim 1, **characterized in that** said regulating means (13, 25, 26) are located inside said body (2).

3. Device, according to claim 1, **characterized in that** said flow regulating means (13, 25, 26) are coaxial to said impeller (12).

4. Device, according to claim 1, **characterized in that** said regulating means (13, 25, 26) are coaxial to at least one of said ducts (3, 4) of said body (2).

5. Device, according to the previous claim, **characterized in that** said regulating means (13, 25, 26) are so dimensioned to be housed in said ducts (3, 4).

6. Device, according to one or more of the previous claims, **characterized in that** said regulating means (13, 25, 26) comprise a housing body (13), preferably a cylindrical body.

7. Device, according to one or more of the previous claims, **characterized in that** said regulating means (13, 25, 26) are of a variable section type.

8. Device, according to one or more of the previous claims, **characterized in that** said regulating means (13, 25, 26) comprise a membrane (25).

9. Device, according to one or more of the previous claims, **characterized in that** said regulating means (13, 25, 26) comprise at least a resiliently deformable element.

10. Device, according to one or more of the previous claims, **characterized in that** said regulating means (13, 25, 26) comprise spacers (26).

11. Device, according to the previous claim, **characterized in that** said spacers (26) have a calibrated height and distribution, and they allow to limit the closure of a passage (27), and consequently to define a maximum flow.

12. Device, according to the previous claim, **characterized in that** said passage (27) is located near or downstream said spacers (26).

13. Device, according to claim 6, **characterized in that** said housing body (13) delimits at least a passage (27) being axial with respect to the fluid flow (F) circulating in the body (2) of the device (1).

14. Device, according to claims 6 and 8, **characterized in that** said housing body (13) houses at least a portion of said membrane (25).

15. Device, according to claim 1, **characterized in that** said intercepting device (2, 7) comprises the body (2) of said device (1).

16. Device, according to claim 1, **characterized in that** said intercepting device (2, 7) comprises an electrovalve (7).

17. Device, according to the previous claim, **characterized in that** said electrovalve (7) is of a normally closed type and is located between said ducts (3, 4).

18. Device, according to one or more of the claims 16 and 17, **characterized in that** said electrovalve (7) is electrically connected and controlled by a utilizing apparatus, in particular a household electric appliance or washing machine.

19. Device, according to one or more of the previous claims 16 to 18, **characterized in that** said detecting unit (6) is apt to generate an electric signal being used for control purposes of said electrovalve (7).

20. Device, according to the previous claim, **characterized in that** said electric signal is used for determining the closure of said electrovalve (7) when the quantity of fluid which is passed through the device (1) is equal to a predetermined one.

21. Device, according to one or more of the previous claims 16 to 20, **characterized in that** said electrovalve (7) has a portion (47) being apt to be engaged in a relevant seat obtained in said body (2) of the device (1).

22. Device, according to the previous claim, **characterized in that** said portion (47) and/or said seat obtained in said body (2) are of a threaded type.

23. Device, according to one or more of the previous claims 16 to 21, **characterized in that** said electrovalve (7) comprises an electromagnet (36).

24. Device, according to claim 1, **characterized in that** said body (2) comprises at least a chamber (A, C).

25. Device, according to claim 1, **characterized in that** said body (2) comprises at least two sections (2, 47) integral to each other.

26. Device, according to the previous claim, **characterized in that** said sections (2, 47) comprise a second body (47).

27. Device, according to claim 1, **characterized in that** said body (2) comprises plugging means (43, 44), being apt to plug at least one of said ducts (3, 4).

28. Device, according to the previous claim, **characterized in that** said plugging means (43, 44) comprise a disk (43) and/or a membrane (44).

29. Device, according to the previous claim, **characterized in that** said disk (43) has at least a hole (42).

30. Device, according to claim 28, **characterized in that** said membrane (44) has at least a conduit (49).

31. Device, according to claims 24, 29 and 30, **characterized in that** a first chamber (A) and second chamber (C) are provided in said body (2), and that said hole (42) and said conduit (49) are apt to put said first chamber (A) in communication with said second chamber (C).

32. Device, according to claim 1, **characterized in that** said detecting unit (6) comprises additional means (31, 32) for the support and interconnection or electric connection of a detector (30), in particular for detecting the rotation of said impeller (12) and for connection and/or electric connection to a utilizing and/or control apparatus.

33. Device, according to the previous claim, **characterized in that** said additional means (31, 32) comprise a circuit board (31).

34. Device, according to the claim 32, **characterized in that** said additional means (31, 32) comprise a connector (32).

35. Device, according to claims 32 and 34, **characterized in that** said additional means (31, 32) and/or said connector (32) are so obtained for being coupled in a separate way to a second connector (33).

36. Device, according to the claim 32, **characterized in that** said detector (30) is located in correspondence or in axis with at least a magnetic element (20) associated to said impeller (12).

37. Device, according to the claim 1, **characterized in that** the axis of rotation of said impeller (12) is coaxial to the fluid flow (F) to be measured.

38. Device, according to the claim 1, **characterized in that** the axis of rotation of said impeller (12) is coaxial to at least one of said ducts (3, 4).

39. Device, according to the claim 1, **characterized in that** the axis of rotation of said impeller (12) is coaxial to at least one of the ducts (3, 4) of said intercepting device (2, 7) of the fluid flow (F).

40. Device, according to the claim 1, **characterized in that** said impeller (12) comprises a central core (16) coupled to a pivot (17), from which vanes (18) depart radially.

41. Device according to the previous claim, **characterized in that** said vanes (18) are tilted and/or have a helical form.

42. Device, according to the claim 40, **characterized in that** said pivot (17) is arranged in an axial way to at least one of said ducts (3, 4) of the body (2).

43. Device, according to one or more of the claims 40 and 41, **characterized in that** said vanes (18) have generating means (20), being apt to produce a signal that can be detected by said detecting unit (6).

44. Device, according to the previous claim, **characterized in that** said generating means (20) comprise inserts (20).

45. Device, according to the previous claim, **characterized in that** said inserts (20) are inserted on the outer side of said vanes (18).

46. Device, according to claim 1, **characterized in that**, upstream the impeller (12), conveying means (11) are located, apt to convey said fluid flow (F) directly onto said impeller (12).

47. Device, according to the previous claim, **characterized in that** said conveying means (11) are located in a coaxial way with respect to said impeller (12).

48. Device, according to claims 38 and 39, **characterized in that** said conveying means (11) comprise a diffuser (11) presenting vanes (14), integral with a central core (15).

49. Device, according to the previous claim, **characterized in that** said vanes (14) have a tilted and/or helical form.

50. Device, according to claims 40 and 48, **characterized in that** said vanes (14) of said diffuser (11) are tilted in the opposite direction with respect to the vanes (18) of said impeller (12).

51. Device, according to claim 1, **characterized in that** said impeller (12) is mounted in a housing body (13), preferably cylindrical.

52. Device, according to the previous claim, **characterized in that** said housing body (13) and/or said flow sensor (9) are apt to be inserted in at least one of said ducts (3, 4) of the body (2).

53. Device, according to claims 48 and 51, **characterized in that** said diffuser (11) and said housing body (13) provide mutual coupling means (28, 29), in order to form one sole compact structure housing said impeller (12).

54. Device, according to the previous claim, **characterized in that** the dimensions of said compact structure are such to be housed in one of said ducts (3, 4) of said device (1).

55. Device, according to claim 51, **characterized in that** said housing body (13) also forms the body of said regulating means (13, 25, 26).

56. Device, according to claim 1, **characterized in that** said body (2) comprises at least a portion or threaded seat, in particular of the type being apt to be coupled to a relevant seat or threaded portion.

57. Device, according to claim 1, **characterized in that** said flow sensor (9) is preferably located between said intercepting device (2, 7) and the plug of the water mains.

58. Device, according to claim 1, **characterized in that** a filter (10) is located upstream said impeller (12) for warranting a correct operation of the device (1) also in case of impurities in the fluid flow (F).

59. Device, according to one or more of the previous claims 15 to 21, **characterized in that** said flow sensor (9) and/or said detecting unit (6) and/or said electrovalve (7) are elements distinct from said body (2) of the device (1), which are made integral with it through mutual engage fastening means.

60. Device, according to claim 1, **characterized in that** said fluid flow (F) circulating in said flow sensor (9) and/or in said body (2) is also flowing in said regulating means (13, 25, 26).

61. Method for the measurement and/or volumetric control of a fluid in a device (1) having a body (2) with ducts (3, 4), in particular an inlet duct (3) and an outlet duct (4), through a flow sensor (9), comprising:
- an impeller (12) having a central core (16), from which vanes (18) depart radially;
- a detecting unit (6), being apt to detect the rotation of said impeller (12),
said method comprising the following steps:
- connecting said inlet duct (3) to a supply line of a fluid;
- ensuring an angular movement of said impeller (12) by means of the flow (F) of said fluid;
- detecting the number of revolutions performed by said impeller (12) through said detecting unit (6), so as to determine information related to the fluid flow (F) passing through the device (1);
- connecting said outlet duct (4) to a utilizing and/or control apparatus; said method being **characterized in that**,
it stabilizes the flow (F) of said fluid through the provision of regulating means (13, 25, 26) located downstream said impeller (12).

62. Method, according to the previous claim, **characterized in that** it filters the fluid flow (F) inside the body (2) by means of a filter (10) located upstream said flow sensor (9).

63. Method, according to claim 61, **characterized in that** it conveys the fluid flow (F) onto the vanes (18) of said impeller (12) through the location of conveying means (11) of the fluid flow (F) upstream said impeller (12).

64. Method, according to claim 61, **characterized in that** it transmits information related to the fluid flow (F) to an electronic assembly.

65. Method, according to the previous claim, **characterized in that** in said electronic assembly it provides means being apt to process said information and convert it into an electric control signal of an intercepting device (2, 7), in particular of the normally closed type.

66. Method, according to claim 61, **characterized in that** said measurement is performed on the fluid flow (F) circulating through said flow sensor (9) and/or in said body (2) of the device (1), and the same quantity of fluid is made circulated also through said regulating means (13, 25, 26).
